# EUROPEAN PATENT APPLICATION

(11) **EP 4 553 309 A1**
(43) Date of publication of application: **14.05.2025**
(21) Application number: 24212753.8
(22) Date of filing: 13.11.2024
(51) Int. Cl.: F02C 7/32, F02C 7/36

(54) **TURBINE ENGINE ACCESSORY SYSTEM WITH MULTIPLE GEARBOXES**

(30) Priority: 13.11.2023 US 202318389075
(71) Applicant: RTX Corporation, Farmington, CT 06032 (US)
(72) Inventor: MORTON, Jeffrey T., Manchester, 06040 (US); BREAULT, Andrew E., Bolton, 06043 (US)
(74) Representative: Dehns

(57) **Abstract**

An assembly for a turbine engine (20) includes an inner tower shaft (82), a layshaft (84), an outer tower shaft (86), an intermediate gear system (90), an inner gearbox (78) and an outer gearbox (80). The layshaft (84) is coupled to the inner tower shaft (82) through an inner bevel gearing connection. The outer tower shaft (86) is coupled to the layshaft (84) through an outer bevel gearing connection. The intermediate gear system (90) is configured to transfer mechanical power from the inner tower shaft (82) to the layshaft (84) and the outer tower shaft (86). The intermediate gear system (90) includes the inner bevel gearing connection and the outer bevel gearing connection. The inner gearbox (78) is coupled to the intermediate gear system (90) through the layshaft (84). The outer gearbox (80) is coupled to the intermediate gear system (90) through the outer tower shaft (86).

## Description

### BACKGROUND OF THE DISCLOSURE

### 1. Technical Field

This invention relates generally to a turbine engine and, more particularly, to an engine accessory system for the turbine engine.

### 2. Background Information

A gas turbine engine may include multiple engine accessories such as a pump, a generator and a motor. These engine accessories are typically mechanically coupled to an internal rotating assembly of the gas turbine engine through an accessory gearbox. Various types and configurations of accessory gearboxes are known in the art. While these known accessory gearboxes have various benefits, there is still room in the art for improvement.

### SUMMARY OF THE DISCLOSURE

According to an aspect of the invention, an assembly is provided for a turbine engine. This assembly includes an inner tower shaft, a layshaft, an outer tower shaft, an intermediate gear system, an inner gearbox and an outer gearbox. The inner tower shaft is rotatable about an inner shaft axis. The layshaft is rotatable about a layshaft axis. The layshaft is coupled to the inner tower shaft through an inner bevel gearing connection. The outer tower shaft is rotatable about an outer shaft axis. The outer tower shaft is coupled to the layshaft through an outer bevel gearing connection. The intermediate gear system is configured to transfer mechanical power from the inner tower shaft to the layshaft and to the outer tower shaft. The intermediate gear system includes the inner bevel gearing connection and the outer bevel gearing connection. The inner gearbox is coupled to the intermediate gear system through the layshaft. The outer gearbox is coupled to the intermediate gear system through the outer tower shaft.

According to another aspect of the invention, another assembly is provided for a turbine engine. This assembly includes an inner tower shaft, a layshaft, an outer tower shaft, a gear system, an inner gearbox and an outer gearbox. The inner tower shaft is rotatable about an inner shaft axis. The layshaft is rotatable about a layshaft axis. The layshaft is coupled to the inner tower shaft through a first gearing connection. The outer tower shaft is rotatable about an outer shaft axis. The outer tower shaft is coupled to the inner tower shaft through a second gearing connection. The gear system is configured to transfer mechanical power from the inner tower shaft to the layshaft and the outer tower shaft. The gear system includes the first gearing connection and the second gearing connection. The inner gearbox is coupled to the gear system through the layshaft. The outer gearbox is coupled to the gear system through the outer tower shaft.

According to still another aspect of the invention, another assembly is provided for a turbine engine. This assembly includes an inner tower shaft, a layshaft, an outer tower shaft, an intermediate gear system, an inner gearbox and an outer gearbox. The inner tower shaft is rotatable about an inner shaft axis. The layshaft is rotatable about a layshaft axis. The outer tower shaft is rotatable about an outer shaft axis which is non-parallel with the inner shaft axis. The intermediate gear system is coupled to the inner tower shaft, the layshaft and the outer tower shaft. The intermediate gear system is configured to transfer mechanical power from the inner tower shaft to the layshaft and the outer tower shaft. The inner gearbox is coupled to the intermediate gear system through the layshaft. The outer gearbox is coupled to the intermediate gear system through the outer tower shaft.

The following optional features may be applied individually, or in any combination, to any of the above aspects of the invention.

The first gearing connection may be a first bevel gearing connection. In addition or alternatively, the second gearing connection may be a second bevel gearing connection.

The inner shaft axis, the layshaft axis and the outer shaft axis may be disposed in a common reference plane.

The inner shaft axis may be angularly offset from the layshaft axis by an inner shaft-layshaft offset angle. The outer shaft axis may be angularly offset from the layshaft axis by an outer shaft-layshaft offset angle. The outer shaft-layshaft offset angle may be different than the inner shaft-layshaft offset angle.

The gear system may include a first inner shaft gear, a second inner shaft gear, an outer shaft gear and a layshaft gear. The first inner shaft gear may be rotatably fixed to the inner tower shaft and meshed with the layshaft gear. The second inner shaft gear may be rotatably fixed to the inner tower shaft and meshed with the outer shaft gear. The outer shaft gear may be rotatably fixed to the outer tower shaft. The layshaft gear may be rotatably fixed to the layshaft.

A diameter of the first inner shaft gear may be different than a diameter of the second inner shaft gear.

The assembly may also include an engine rotating assembly and an inner gear system. The engine rotating assembly may include a turbine rotor. The engine rotating assembly may be rotatable about an engine axis. The inner gear system may be configured to transfer the mechanical power from the engine rotating assembly to the inner tower shaft to drive operation of the inner gearbox and the outer gearbox.

The assembly may also include a high pressure turbine section and a low pressure turbine section. The turbine rotor may be disposed in the high pressure turbine section.

At least two of the inner shaft axis, the layshaft axis, the outer shaft axis or the engine axis may be disposed in a common reference plane.

At least two of the inner shaft axis, the layshaft axis or the outer shaft axis may be disposed in a common reference plane.

The inner shaft axis may be angularly offset from the outer shaft axis by an inner shaft-outer shaft offset angle. The inner shaft-outer shaft offset angle may be an obtuse angle.

The inner shaft axis may be non-parallel with the outer shaft axis.

The inner shaft axis may be angularly offset from the layshaft axis by an inner shaft-layshaft offset angle. The inner shaft-layshaft offset angle may be equal to or greater than ninety degrees. In addition or alternatively, the outer shaft axis may be angularly offset from the layshaft axis by an outer shaft-layshaft offset angle. The outer shaft-layshaft offset angle may be equal to or greater than ninety degrees.

The inner shaft axis may be angularly offset from the layshaft axis by an inner shaft-layshaft offset angle. The outer shaft axis may be angularly offset from the layshaft axis by an outer shaft-layshaft offset angle. The outer shaft-layshaft offset angle may be equal to the inner shaft-layshaft offset angle.

The inner shaft axis may be angularly offset from the layshaft axis by an inner shaft-layshaft offset angle. The outer shaft axis may be angularly offset from the layshaft axis by an outer shaft-layshaft offset angle. The outer shaft-layshaft offset angle may be different than the inner shaft-layshaft offset angle.

The intermediate gear system may include an inner shaft bevel gear, an outer shaft bevel gear and a layshaft bevel gear arranged between and meshed with the inner shaft bevel gear and the outer shaft bevel gear. The inner shaft bevel gear may be rotatably fixed to the inner tower shaft. The outer shaft bevel gear may be rotatably fixed to the outer tower shaft. The layshaft bevel gear may be rotatably fixed to the layshaft.

The intermediate gear system may include an inner shaft bevel gear, an outer shaft bevel gear, a first layshaft bevel gear and a second layshaft bevel gear. The inner shaft bevel gear may be rotatably fixed to the inner tower shaft and meshed with the first layshaft bevel gear. The outer shaft bevel gear may be rotatably fixed to the outer tower shaft and meshed with the second layshaft bevel gear. The first layshaft bevel gear may be rotatably fixed to the layshaft. The second layshaft bevel gear may be rotatably fixed to the layshaft.

A diameter of the first layshaft bevel gear may be different than a diameter of the second layshaft bevel gear.

The assembly may also include an engine housing. The engine housing may include an inner case and an outer case. The inner gearbox may be mounted to the inner case. The outer gearbox may be mounted to the outer case.

The invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic side cutaway illustration of a geared turbine engine.
FIG. 2 is a partial schematic sectional illustration of the turbine engine with an accessory system.
FIG. 3 is a plan view illustration of various gearboxes mated with their engine accessories.
FIGS. 4-6 are partial schematic sectional illustrations of the turbine engine with various alternative accessory system arrangements.

### DETAILED DESCRIPTION

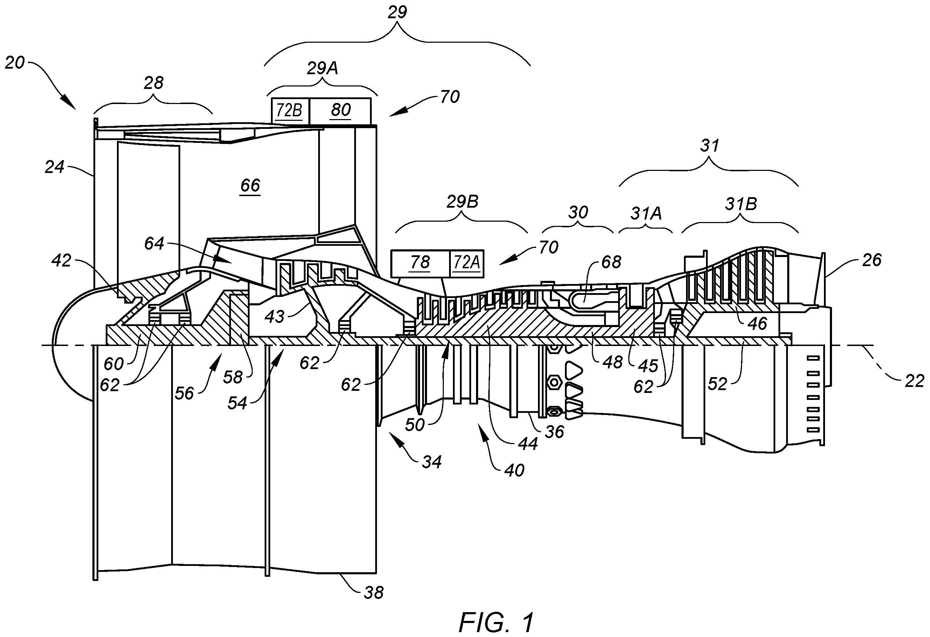

FIG. 1 is a side cutaway illustration of a geared turbine engine 20. This turbine engine 20 extends along an engine axis 22 between an upstream airflow inlet 24 and a downstream combustion products exhaust 26. The turbine engine 20 includes a fan section 28, a compressor section 29, a combustor section 30 and a turbine section 31. The compressor section 29 includes a low pressure compressor (LPC) section 29A and a high pressure compressor (HPC) section 29B. The turbine section 31 includes a high pressure turbine (HPT) section 31A and a low pressure turbine (LPT) section 31B.

The engine sections 28-31B are arranged sequentially along the engine axis 22 within an engine housing 34. This engine housing 34 includes an inner case 36 (e.g., a core case) and an outer case 38 (e.g., a fan case). The inner case 36 may house one or more of the engine sections 29A-31B; e.g., a core 40 or gas generator of the turbine engine 20. The outer case 38 may house at least the fan section 28.

Each of the engine sections 28, 29A, 29B, 31A and 31B includes a respective bladed rotor 42-46. Each of these bladed rotors 42-46 includes a plurality of rotor blades arranged circumferentially around and connected to one or more respective rotor disks. The rotor blades, for example, may be formed integral with or mechanically fastened, welded, brazed and/or otherwise attached to the respective rotor disk(s).

The HPC rotor 44 is coupled to and rotatable with the HPT rotor 45. The HPC rotor 44 of FIG. 1, for example, is connected to the HPT rotor 45 by a high speed shaft 48. At least (or only) the HPC rotor 44, the HPT rotor 45 and the high speed shaft 48 collectively form a high speed rotating assembly 50; e.g., a high speed spool. The LPC rotor 43 is coupled to and rotatable with the LPT rotor 46. The LPC rotor 43 of FIG. 1, for example, is connected to the LPT rotor 46 by a low speed shaft 52. At least (or only) the LPC rotor 43, the LPT rotor 46 and the low speed shaft 52 collectively form a low speed rotating assembly 54; e.g., a low speed spool. This low speed rotating assembly 54 is coupled to the fan rotor 42. The fan rotor 42 of FIG. 1, for example, is connected to the low speed rotating assembly 54 and its low speed shaft 52 through a drivetrain 56. This drivetrain 56 may be configured as a geared drivetrain. The fan rotor 42 of FIG. 1, for example, is connected to a geartrain 58 (e.g., an epicyclic gear system, a transmission, etc.) by a fan shaft 60. The geartrain 58 is connected to the LPT rotor 46 through the low speed shaft 52. With this arrangement, the low speed rotating assembly 54 and its members may rotate at a different (e.g., faster) speed than the fan rotor 42. In other embodiments, however, the drivetrain 56 may alternatively be configured as a direct drive system where the geartrain 58 is omitted and the LPT rotor 46 and the fan rotor 42 rotate at a common (the same) speed; e.g., the fan rotor 42 may be integrated as a part of the low speed rotating assembly 54.

The engine shafts 48, 52 and 60 are rotatably supported by a plurality of bearings 62; e.g., rolling element and/or thrust bearings. Each of these bearings 62 is connected to the engine housing 34 by at least one stationary structure such as, for example, an annular support strut. With this arrangement, each of the engine rotating assemblies 50 and 54 and its members may be rotatable about the engine axis 22.

During operation, air enters the turbine engine 20 through the airflow inlet 24. This air is directed through the fan section 28 and into a core flowpath 64 and a bypass flowpath 66. The core flowpath 64 extends sequentially through the engine sections 29A-31B; e.g., the engine core 40. The air within the core flowpath 64 may be referred to as "core air". The bypass flowpath 66 extends through a bypass duct and bypasses the engine core 40. The air within the bypass flowpath 66 may be referred to as "bypass air".

The core air is compressed by the LPC rotor 43 and the HPC rotor 44, and is directed into a combustion chamber 68 of a combustor in the combustor section 30. Fuel is injected into the combustion chamber 68 and mixed with the compressed core air to provide a fuel-air mixture. This fuel-air mixture is ignited and combustion products thereof flow through and sequentially cause the HPT rotor 45 and the LPT rotor 46 to rotate. The rotation of the HPT rotor 45 and the LPT rotor 46 respectively drive rotation of the HPC rotor 44 and the LPC rotor 43 and, thus, compression of the air received from a core airflow inlet. The rotation of the LPT rotor 46 also drives rotation of the fan rotor 42. The rotation of the fan rotor 42 propels the bypass air through and out of the bypass flowpath 66. The propulsion of the bypass air may account for a majority of thrust generated by the turbine engine 20, e.g., more than seventy-five percent (75%) of engine thrust. The turbine engine 20 of the present disclosure, however, is not limited to the foregoing exemplary thrust ratio.

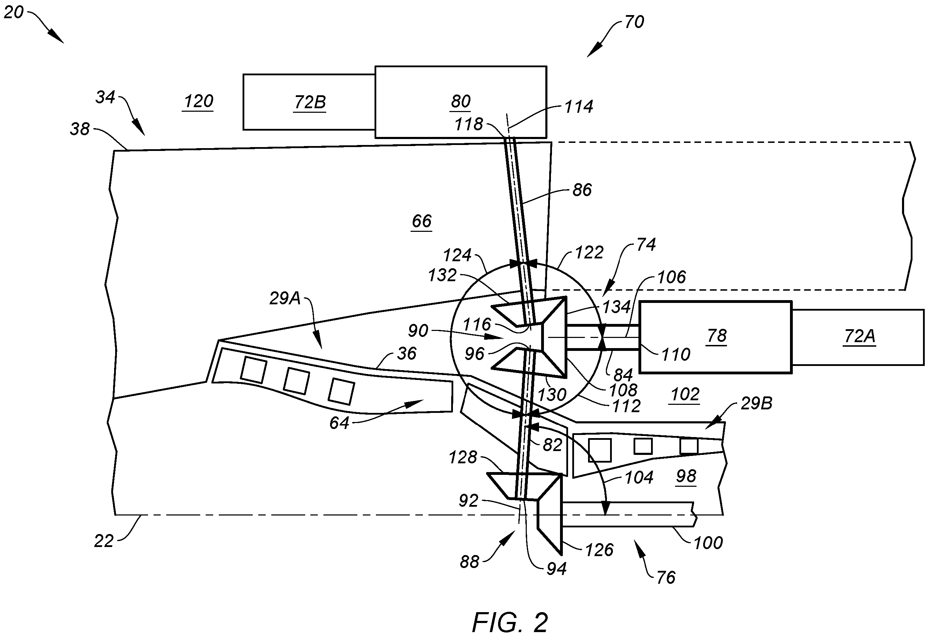

Referring to FIG. 2, the turbine engine 20 also includes an accessory system 70. This accessory system 70 includes a plurality of engine accessories 72A and 72B (generally referred to as "72") and a power transfer system 74. Briefly, the power transfer system 74 is configured to operatively couple and transfer power between an engine rotating assembly 76 (e.g., the high speed rotating assembly 50 of FIG. 1, or alternatively the low speed rotating assembly 54 of FIG. 1) and the engine accessories 72. The engine rotating assembly 76 may thereby drive operation of some or all of the engine accessories 72 during (e.g., normal) turbine engine operation. Alternatively, at least one of the engine accessories 72 (e.g., an electric or pneumatic starter motor) may drive rotation of the engine rotating assembly 76 during, for example, turbine engine startup.

Examples of the engine accessories 72 include, but are not limited to, one or more electric machines, one or more pumps, one or more auxiliary compressors, one or more power transfer units, or any other mechanically driven device(s) and/or mechanical drive device(s). Examples of the electric machine include, but are not limited to, an electric generator, an electric motor, and an electric motor-generator. Examples of the pump include, but are not limited to, a fuel pump, a lubricant pump, a coolant pump, a water pump, and a hydraulic pump. Examples of the auxiliary compressor include, but are not limited to, a shaft driven compressor and a pneumatic compressor. Examples of the power transfer unit include, but are not limited to, a device that mechanically ties multiple engine rotating assemblies (e.g., the high speed and the low speed rotating assemblies 50 and 54 of FIG. 1) to each other to facilitate transfer of mechanical power between those respective engine rotating assemblies.

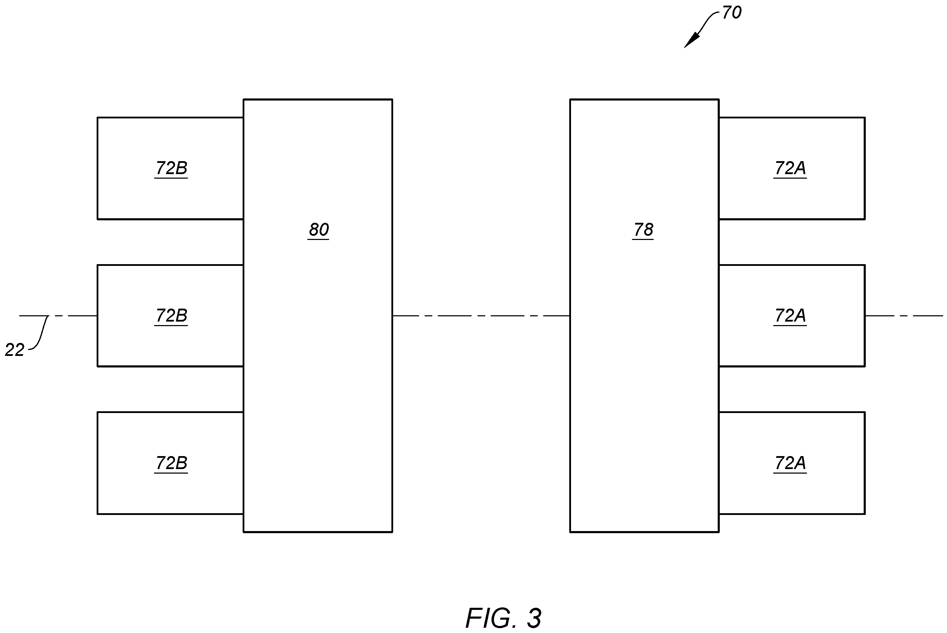

The engine accessories 72 of FIG. 2 are arranged / divided into an inner set of engine accessories and an outer set of engine accessories, where each engine accessory set may include one or more of the engine accessories 72. The inner engine accessory set of FIG. 2 include the one or more of the inner engine accessories 72A; see also FIG. 3. This inner engine accessory set and its inner engine accessories 72A are located proximate (e.g., radially outboard of and next to) the inner case 36. The outer engine accessory set of FIG. 2 include the one or more of the outer engine accessories 72B; see also FIG. 3. This outer engine accessory set and its outer engine accessories 72B are located proximate (e.g., radially outboard of and next to) the outer case 38. The outer engine accessory set and its outer engine accessories 72B are thereby disposed radially outboard of the inner engine accessory set and its inner engine accessories 72A. Moreover, the outer engine accessory set and its outer engine accessories 72B may be located axially forward of and/or upstream of (e.g., relative to flow through one or more of the flowpaths 64 and/or 66 of FIG. 1) the inner engine accessory set and its inner engine accessories 72A. The present disclosure, however, is not limited to such an exemplary arrangement.

The power transfer system 74 includes an accessory system drivetrain and a plurality of accessory gearboxes 78 and 80. The accessory system drivetrain of FIG. 2 includes a radial inner tower shaft 82, a layshaft 84, a radial outer tower shaft 86, an inner gear system 88 and an intermediate gear system 90.

The inner tower shaft 82 extends longitudinally along an inner shaft axis 92 between and to a radial inner end 94 of the inner tower shaft 82 and a radial outer end 96 of the inner tower shaft 82. The inner shaft inner end 94 is disposed in a radial inner region 98 of the turbine engine 20 with an engine shaft 100 (e.g., the high speed shaft 48 of FIG. 1, or alternatively the low speed shaft 52 of FIG. 1) of the engine rotating assembly 76. This engine inner region 98 is disposed radially inboard of the core flowpath 64. The inner shaft outer end 96 is disposed in a radial intermediate region 102 of the turbine engine 20 with the inner gearbox 78. This engine intermediate region 102 is disposed radially between the core flowpath 64 and the bypass flowpath 66, and is radially outboard of the inner case 36. With this arrangement, the inner tower shaft 82 extends radially across the core flowpath 64 (e.g., through a vane of a mid-compressor vane arrangement) from the inner shaft inner end 94 in the engine inner region 98 to the inner shaft outer end 96 in the engine intermediate region 102.

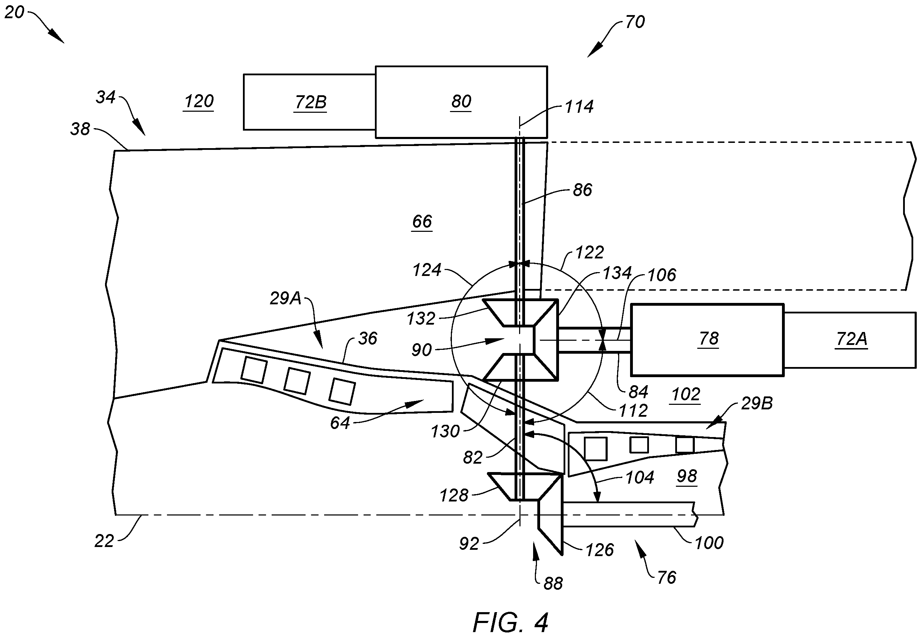

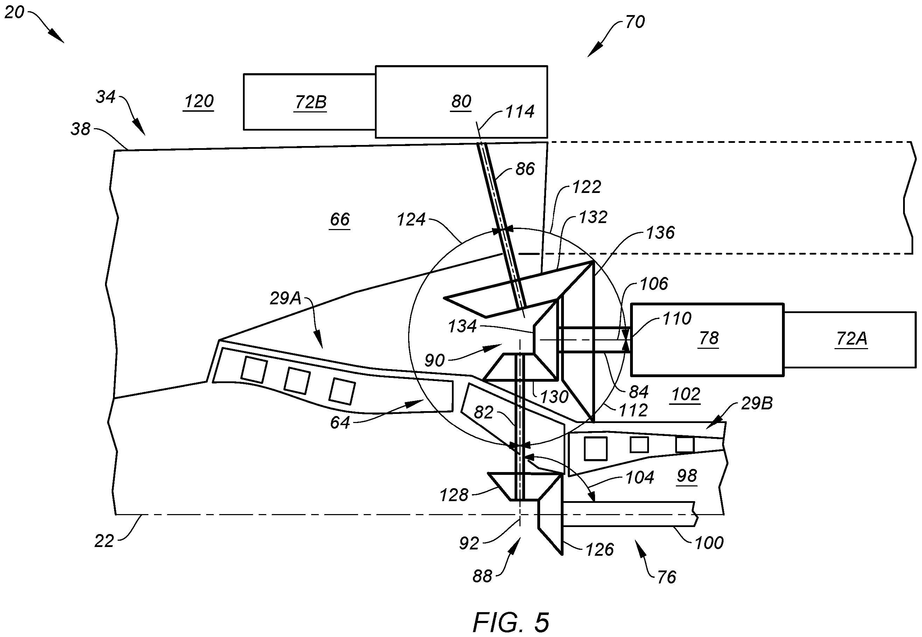

The inner tower shaft 82 is rotatable about its inner shaft axis 92. This inner shaft axis 92 is angularly offset from the engine axis 22 by an included inner shaft-engine shaft offset angle 104. The inner shaft-engine shaft offset angle 104 of FIG. 2 is a non-zero acute angle greater than thirty degrees (30°) or forty-five degrees (45°); e.g., between sixty degrees (60°) and eighty degrees (80°), or greater than eighty degrees (80°). Alternatively, referring to FIGS. 4 and 5, the inner shaft-engine shaft offset angle 104 may be a right angle of ninety degrees (90°). Still alternatively, the inner shaft-engine shaft offset angle 104 may be an obtuse angle equal to or less than, for example, one-hundred or one-hundred and ten degrees (100-110°). The present disclosure, however, is not limited to such an exemplary arrangements.

Referring to FIG. 2, the layshaft 84 extends longitudinally along a layshaft axis 106 between and to a first (e.g., forward, upstream) end 108 of the layshaft 84 and a second (e.g., aft, downstream) end 110 of the layshaft 84. This layshaft 84 of FIG. 2 is disposed in the engine intermediate region 102, for example axially aft and downstream of the inner tower shaft 82 and its inner shaft outer end 96. The layshaft 84 is rotatable about its layshaft axis 106. This layshaft axis 106 may be arranged parallel with or (e.g., slightly) angularly offset from the engine axis 22. The layshaft axis 106 is angularly offset from the inner shaft axis 92 by an included inner shaft-layshaft offset angle 112. The inner shaft-layshaft offset angle 112 of FIG. 2 is an obtuse angle less than one-hundred and fifty degrees (150°) or one-hundred and thirty five degrees (135°); e.g., between one-hundred and twenty degrees (120°) and one-hundred degrees (100°), or less than one-hundred degrees (100°). Alternatively, referring to FIGS. 4 and 5, the inner shaft-layshaft offset angle 112 may be a right angle of ninety degrees (90°). Still alternatively, the inner shaft-layshaft offset angle 112 may be a non-zero acute angle. The present disclosure, however, is not limited to such an exemplary arrangements.

The outer tower shaft 86 extends longitudinally along an outer shaft axis 114 between and to a radial inner end 116 of the outer tower shaft 86 and a radial outer end 118 of the outer tower shaft 86. The outer shaft inner end 116 is disposed in the engine intermediate region 102. The outer shaft outer end 118 is disposed in an outer region 120 to a radial exterior of the turbine engine 20 with the outer gearbox 80. This outer region 120 is disposed radially outboard of the bypass flowpath 66 and the outer case 38; e.g., radially outboard of the engine housing 34. With this arrangement, the outer tower shaft 86 extends radially across the bypass flowpath 66 (e.g., through a bypass flowpath bifurcation) from the outer shaft inner end 116 in the engine intermediate region 102 to the outer shaft outer end 118 in the outer region 120.

The outer tower shaft 86 is rotatable about its outer shaft axis 114. This outer shaft axis 114 is angularly offset from the layshaft axis 106 by an included outer shaft-layshaft offset angle 122. The outer shaft-layshaft offset angle 122 of FIG. 2 is an obtuse angle less than one-hundred and fifty degrees (150°) or one-hundred and thirty five degrees (135°); e.g., between one-hundred and twenty degrees (120°) and one-hundred degrees (100°), or less than one-hundred degrees (100°). Alternatively, referring to FIG. 4, the outer shaft-layshaft offset angle 122 may be a right angle of ninety degrees (90°). Referring to FIGS. 2 and 4, the outer shaft-layshaft offset angle 122 may be equal to the inner shaft-layshaft offset angle 112. Alternatively, referring to FIG. 5, the outer shaft-layshaft offset angle 122 may be different (e.g., greater, or alternatively less) than the inner shaft-layshaft offset angle 112. Referring again to FIG. 2, the outer shaft axis 114 is angularly offset from the inner shaft axis 92 by an included inner shaft-outer shaft offset angle 124. The inner shaft-outer shaft offset angle 124 of FIG. 2 is an angle greater than sixty degrees (60°) or ninety degrees (90°); e.g., between one-hundred and twenty degrees (120°) and one-hundred sixty degrees (160°), or greater than one-hundred sixty degrees (160°).. With this arrangement, the outer shaft axis 114 is non-parallel with the inner shaft axis 92. Alternatively, referring to FIG. 4, the inner shaft-outer shaft offset angle 124 may be one-hundred and eighty degrees (180°). With this arrangement, the outer shaft axis 114 is parallel with (e.g., coaxial with) the inner shaft axis 92. The present disclosure, however, is not limited to such an exemplary arrangements.

While the axes 22, 92, 106 and 114 of FIG. 2 are angularly offset from one another, some or all of these axes 22, 92, 106 and 114 may be co-planar. Each of the axes 92, 106 and 114 of FIG. 2 (e.g., see also FIGS. 4-6), for example, may lay in a common reference plane (e.g., plane of FIG. 2) which includes and projects radially out from the engine axis 22. The present disclosure, however, is not limited to such an exemplary arrangement. Some or all of the axes 92, 106 and/or 114, for example, may also or alternatively be angularly offset from one another when viewed in a reference plane perpendicular to the engine axis 22.

The inner gear system 88 is configured as or otherwise includes a transmission, a gearbox and/or any other type of gearing which operatively couples and transfers mechanical power between the engine rotating assembly 76 and the inner tower shaft 82. The inner gear system 88 of FIG. 2, for example, includes a plurality of meshed gears 126 and 128; e.g., bevel gears, or a pinon gear and bevel gear. The engine shaft gear 126 is mounted to the engine rotating assembly 76. More particularly, the engine shaft gear 126 is rotatably fixed to the engine shaft 100 such that the engine shaft gear 126 rotates with the engine shaft 100. The inner shaft inner gear 128 is disposed at (e.g., on, adjacent or proximate) the inner shaft inner end 94. The inner shaft inner gear 128 is rotatably fixed to the inner tower shaft 82 such that the inner shaft inner gear 128 rotates with the inner tower shaft 82. This inner shaft inner gear 128 is also meshed with the engine shaft gear 126. With this arrangement, the inner tower shaft 82 is coupled to the engine rotating assembly 76 and its engine shaft 100 through a (e.g., bevel) gearing connection.

The intermediate gear system 90 is configured as or otherwise includes a transmission, a gearbox and/or any other type of gearing which operatively couples and transfers mechanical power between the inner tower shaft 82, the layshaft 84 and/or the outer tower shaft 86. The intermediate gear system 90 of FIG. 2, for example, includes a plurality of meshed gears 130, 132 and 134; e.g., bevel gears. The inner shaft outer gear 130 is disposed at the inner shaft outer end 96. The inner shaft outer gear 130 is rotatably fixed to the inner tower shaft 82 such that the inner shaft outer gear 130 rotates with the inner tower shaft 82 and, thus, the inner shaft inner gear 128. The outer shaft gear 132 is disposed at the outer shaft inner end 116. The outer shaft gear 132 is rotatably fixed to the outer tower shaft 86 such that the outer shaft gear 132 rotates with the outer tower shaft 86. The layshaft gear 134 is disposed at the layshaft first end 108. The layshaft gear 134 is rotatably fixed to the layshaft 84 such that the layshaft gear 134 rotates with the layshaft 84. The layshaft gear 134 of FIG. 2 is also meshed with the inner shaft outer gear 130 and the outer shaft gear 132. With this arrangement, the layshaft 84 is coupled to the inner tower shaft 82 through an inner (e.g., bevel) gearing connection. The layshaft 84 is coupled to the outer tower shaft 86 through an outer (e.g., bevel) gearing connection. The layshaft gear 134 is also arranged between and couples the outer shaft gear 132 and the inner shaft outer gear 130.

The inner gearbox 78 is mounted (directly or indirectly) to the inner case 36; e.g., see FIG. 1. An input / output (I/O) of the inner gearbox 78 is coupled to the layshaft 84 at its layshaft second end 110. The layshaft 84 thereby operatively couples and transfers mechanical power between the intermediate gear system 90 and the inner gearbox 78. The inner gearbox 78, in turn, is configured to operatively couple and transfer mechanical power between the layshaft 84 and each of the inner engine accessories 72A mounted thereto; see also FIG. 3.

The outer gearbox 80 is mounted (directly or indirectly) to the outer case 38; e.g., see FIG. 1. An input / output (I/O) of the outer gearbox 80 is coupled to the outer tower shaft 86 at its outer shaft outer end 118. The outer tower shaft 86 thereby operatively couples and transfers mechanical power between the intermediate gear system 90 and the outer gearbox 80. The outer gearbox 80, in turn, is configured to operatively couple and transfer mechanical power between the outer tower shaft 86 and each of the outer engine accessories 72B mounted thereto; see also FIG. 3.

The outer gearbox 80 of FIG. 2 is located axially forward of and/or upstream of the inner gearbox 78. Thus, the outer gearbox 80 and the inner gearbox 78 are axially offset along the engine axis 22. This offset arrangement may facilitate locating outer gearbox 80 over the outer case 38 for mounting and locating the inner gearbox 78 over the inner case 36 for mounting, particularly where the outer case 38 does not axially overlap the inner gearbox mounting location along the inner case 36. The present disclosure, however, is not limited to such an exemplary arrangement.

By providing the multiple gearboxes 78 and 80, the engine accessories 72 are located at multiple different locations within the turbine engine 20. This may reduce space requirements for engine accessories in the engine intermediate region 102 as well as reduce space requirement for engine accessories outside the outer case 38. By reducing the space requirements in the engine intermediate region 102, there are less restraints on bypass flowpath trajectory and/or size within the turbine engine 20. By reducing the space requirement in the outer region 120, an overall size of a nacelle for the turbine engine 20 may be reduced. These reductions may facilitate provision of a higher efficiency bypass flowpath design and/or reduced drag along the nacelle.

In some embodiments, referring to FIG. 5, the intermediate gear system 90 may include an additional layshaft gear 136; e.g., a bevel gear. Here, the first layshaft gear 134 is meshed with the inner shaft outer gear 130. The second layshaft gear 136 is meshed with the outer shaft gear 132 to provide the outer gearing connection between the layshaft 84 and the outer tower shaft 86. This second layshaft gear 136 is rotatably fixed to the layshaft 84 such that the second layshaft gear 136 rotates with the layshaft 84 and, thus, the first layshaft gear 134. The second layshaft gear 136 is disposed longitudinally between the first layshaft gear 134 and the layshaft second end 110; however, the present disclosure is not limited to such an exemplary arrangement. With this arrangement, the inner shaft-layshaft offset angle 112 may be different than (or alternatively the same as) the outer shaft-layshaft offset angle 122.

The inner shaft outer gear 130 and the first layshaft gear 134 may be provided with a common (the same) gear diameter and/or bevel angle where the inner shaft outer gear 130 and/or the first layshaft gear 134 are bevel gears. Similarly, the outer shaft gear 132 and the second layshaft gear 136 may be provided with a common gear diameter. However, the gear diameter of the gears 132 and 136 of FIG. 5 are different (e.g., greater) than the gear diameter of the gears 130 and 134. The present disclosure, however, is not limited to such an exemplary dimensional relationship.

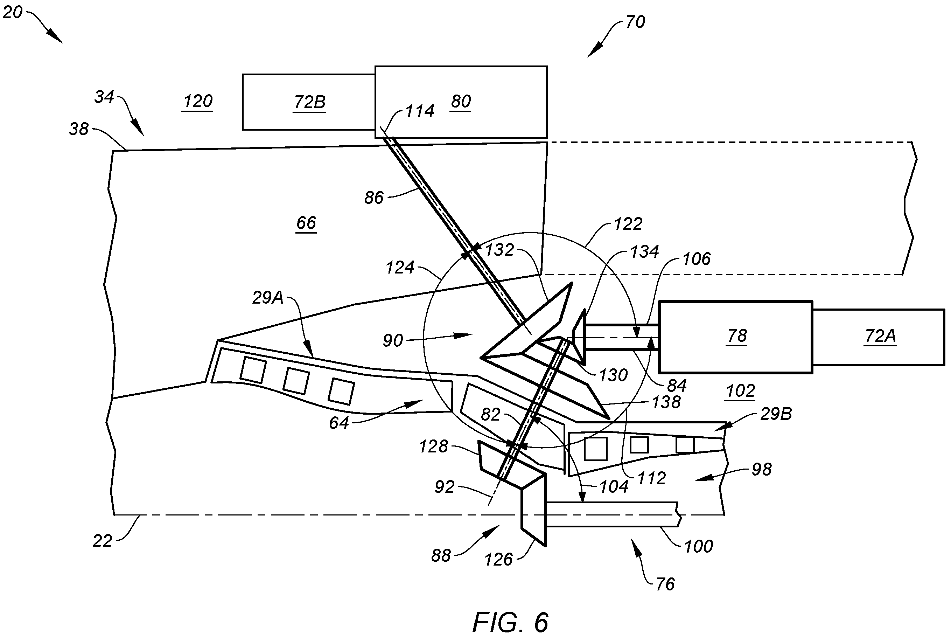

In some embodiments, referring to FIG. 6, the intermediate gear system 90 may include an additional inner shaft gear 138; e.g., a bevel gear. Here, the first inner shaft outer gear 130 is meshed with the layshaft gear 134. The second inner shaft outer gear 138 is meshed with the outer shaft gear 132 to provide the outer gearing connection now between the inner tower shaft 82 and the outer tower shaft 86. This second inner shaft outer gear 138 is rotatably fixed to the inner tower shaft 82 such that the second inner shaft outer gear 138 rotates with the inner tower shaft 82 and, thus, the inner shaft inner gear 128 and the first inner shaft outer gear 130. The second inner shaft outer gear 138 is disposed longitudinally between the first inner shaft outer gear 130 and the inner shaft inner gear 128; however, the present disclosure is not limited to such an exemplary arrangement. With this arrangement, the inner shaft-layshaft offset angle 112 may be different than (or alternatively the same as) the outer shaft-layshaft offset angle 122. In addition, by providing a connection between the inner tower shaft 82 and the outer tower shaft 86, the inner tower shaft 82 may independently transfer the mechanical power to the layshaft 84 and the outer tower shaft 86.

The first inner shaft outer gear 130 and the layshaft gear 134 may be provided with a common (the same) gear diameter and/or bevel angle where the inner shaft outer gear 130 and/or the first layshaft gear 134 are bevel gears. Similarly, the second inner shaft outer gear 138 and the outer shaft gear 132 may be provided with a common gear diameter. However, the gear diameter of the gears 132 and 138 of FIG. 6 are different (e.g., greater) than the gear diameter of the gears 130 and 134. The present disclosure, however, is not limited to such an exemplary dimensional relationship.

The accessory system 70 may be included in various turbine engines other than the one described above. The accessory system 70, for example, may be included in a geared turbine engine where a geartrain connects one or more shafts to one or more rotors in a fan section, a compressor section and/or any other engine section. Alternatively, the accessory system 70 may be included in a turbine engine configured without a geartrain; e.g., a direct drive turbine engine. The accessory system 70 may be included in a turbine engine with a single spool, with two spools (e.g., see FIG. 1), or with more than two spools. The turbine engine may be configured as a turbofan engine, a turbojet engine, a turboprop engine, a turboshaft engine, a propfan engine, a pusher fan engine or any other type of turbine engine. The turbine engine may alternatively be configured as an auxiliary power unit (APU) or an industrial gas turbine engine. The present disclosure therefore is not limited to any particular types or configurations of turbine engines.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for a turbine engine (20), comprising:
an inner tower shaft (82) rotatable about an inner shaft axis (92);
a layshaft (84) rotatable about a layshaft axis (106), the layshaft (84) coupled to the inner tower shaft (82) through an inner bevel gearing connection;
an outer tower shaft (86) rotatable about an outer shaft axis (114), the outer tower shaft (86) coupled to the layshaft (84) through an outer bevel gearing connection;
an intermediate gear system (90) configured to transfer mechanical power from the inner tower shaft (82) to the layshaft (84) and the outer tower shaft (86), the intermediate gear system (90) including the inner bevel gearing connection and the outer bevel gearing connection;
an inner gearbox (78) coupled to the intermediate gear system (90) through the layshaft (84); and
an outer gearbox (80) coupled to the intermediate gear system (90) through the outer tower shaft (86).

2. The assembly of claim 1, further comprising:
an engine rotating assembly (76) comprising a turbine rotor (45; 46), the engine rotating assembly (76) rotatable about an engine axis (22); and
an inner gear system (88) configured to transfer the mechanical power from the engine rotating assembly (76) to the inner tower shaft (82) to drive operation of the inner gearbox (78) and the outer gearbox (80).

3. The assembly of claim 2, further comprising:
a high pressure turbine section (31A); and
a low pressure turbine section (31B), wherein the turbine rotor (45) is disposed in the high pressure turbine section (31).

4. The assembly of claim 2 or 3, wherein at least two of the inner shaft axis (92), the layshaft axis (106), the outer shaft axis (114) or the engine axis (22) are disposed in a common reference plane.

5. The assembly of any of claims 1 to 4, wherein at least two of the inner shaft axis (92), the layshaft axis (106) or the outer shaft axis (114) are disposed in a common reference plane.

6. The assembly of any preceding claim, wherein:
the inner shaft axis (92) is angularly offset from the outer shaft axis (114) by an inner shaft-outer shaft offset angle (124); and
the inner shaft-outer shaft offset angle (124) is an obtuse angle.

7. The assembly of any of claims 1 to 5, wherein the inner shaft axis (92) is non-parallel with the outer shaft axis (114).

8. The assembly of any preceding claim, wherein:
the inner shaft axis (92) is angularly offset from the layshaft axis (106) by an inner shaft-layshaft offset angle (112), and the inner shaft-layshaft offset angle (112) is equal to or greater than ninety degrees; and/or
the outer shaft axis (114) is angularly offset from the layshaft axis (106) by an outer shaft-layshaft offset angle (122), and the outer shaft-layshaft offset angle (122) is equal to or greater than ninety degrees.

9. The assembly of any preceding claim, wherein:
the inner shaft axis (92) is angularly offset from the layshaft axis (106) by a or the inner shaft-layshaft offset angle (112);
the outer shaft axis (114) is angularly offset from the layshaft axis (106) by a or the outer shaft-layshaft offset angle (122); and
the outer shaft-layshaft offset angle (122) is equal to the inner shaft-layshaft offset angle (112).

10. The assembly of any of claims 1 to 8, wherein:
the inner shaft axis (92) is angularly offset from the layshaft axis (106) by an inner shaft-layshaft offset angle (112);
the outer shaft axis (114) is angularly offset from the layshaft axis (106) by an outer shaft-layshaft offset angle (122); and
the outer shaft-layshaft offset angle (122) is different than the inner shaft-layshaft offset angle (122).

11. The assembly of any preceding claim, wherein:
the intermediate gear system (90) includes an inner shaft bevel gear (130), an outer shaft bevel gear and a layshaft bevel gear (134) arranged between and meshed with the inner shaft bevel gear (130) and the outer shaft bevel gear (132);
the inner shaft bevel gear (130) is rotatably fixed to the inner tower shaft (82);
the outer shaft bevel gear (132) is rotatably fixed to the outer tower shaft (86); and
the layshaft bevel gear (134) is rotatably fixed to the layshaft (84).

12. The assembly of any of claims 1 to 10, wherein:
the intermediate gear system (90) includes an inner shaft bevel gear (130), an outer shaft bevel gear (132), a first layshaft bevel gear (134) and a second layshaft bevel gear (136);
the inner shaft bevel gear (130) is rotatably fixed to the inner tower shaft (82) and meshed with the first layshaft bevel gear (134);
the outer shaft bevel gear (132) is rotatably fixed to the outer tower shaft (86) and meshed with the second layshaft bevel gear (136);
the first layshaft bevel gear (134) is rotatably fixed to the layshaft (84); and
the second layshaft bevel gear (136) is rotatably fixed to the layshaft (84), optionally wherein:
a diameter of the first layshaft bevel gear (134) is different than a diameter of the second layshaft bevel gear (136).

13. The assembly of any preceding claim, further comprising an engine housing (34) including an inner case (36) and an outer case (38), wherein the inner gearbox (78) is mounted to the inner case (36), and the outer gearbox (80) is mounted to the outer case (38).

14. An assembly for a turbine engine (20), comprising:
an inner tower shaft (82) rotatable about an inner shaft axis (92);
a layshaft (84) rotatable about a layshaft axis (106), the layshaft (84) coupled to the inner tower shaft (82) through a first gearing connection;
an outer tower shaft (86) rotatable about an outer shaft axis (114), the outer tower shaft (86) coupled to the inner tower shaft (82) through a second gearing connection;
a gear system (90) configured to transfer mechanical power from the inner tower shaft (82) to the layshaft (84) and the outer tower shaft (86), the gear system including the first gearing connection and the second gearing connection;
an inner gearbox (78) coupled to the gear system (90) through the layshaft (84); and
an outer gearbox (80) coupled to the gear system (90) through the outer tower shaft (86), optionally wherein:
the gear system (90) includes a first inner shaft gear (130), a second inner shaft gear (138), an outer shaft gear (132) and a layshaft gear (134);
the first inner shaft gear (130) is rotatably fixed to the inner tower shaft (82) and meshed with the layshaft gear (134);
the second inner shaft gear (138) is rotatably fixed to the inner tower shaft (82) and meshed with the outer shaft gear (132);
the outer shaft gear (132) is rotatably fixed to the outer tower shaft (86); and
the layshaft gear (134) is rotatably fixed to the layshaft (84), further optionally wherein:
a diameter of the first inner shaft gear (130) is different than a diameter of the second inner shaft gear (138).

15. An assembly for a turbine engine (20), comprising:
an inner tower shaft (82) rotatable about an inner shaft axis (92);
a layshaft (84) rotatable about a layshaft axis (106);
an outer tower shaft (86) rotatable about an outer shaft axis (114) which is non-parallel with the inner shaft axis (92);
an intermediate gear system (90) coupled to the inner tower shaft (82), the layshaft (84) and the outer tower shaft (86), the intermediate gear system (90) configured to transfer mechanical power from the inner tower shaft (82) to the layshaft (84) and the outer tower shaft (86);
an inner gearbox (78) coupled to the intermediate gear system (90) through the layshaft (84); and
an outer gearbox (80) coupled to the intermediate gear system (90) through the outer tower shaft (86), optionally wherein:
the inner shaft axis (92), the layshaft axis (106) and the outer shaft axis (114) are disposed in a common reference plane; and/or
the inner shaft axis (92) is angularly offset from the layshaft axis (106) by an inner shaft-layshaft offset angle (112), the outer shaft axis (114) is angularly offset from the layshaft axis (106) by an outer shaft-layshaft offset angle (122), and the outer shaft-layshaft offset angle (122) is different than the inner shaft-layshaft offset angle (112).
